# EUROPÄISCHE PATENTSCHRIFT

(11) **EP 0 859 816 B1**
(45) Veröffentlichungstag und Bekanntmachung des Hinweises auf die Patenterteilung: **08.05.2002**
(21) Anmeldenummer: 96938103.7
(22) Anmeldetag: 06.11.1996
(51) Int. Cl.: C09D 5/44

(54) **ELEKTRISCH ABSCHEIDBARES ÜBERZUGSMITTEL**
ELECTRICALLY DEPOSITED COATING AGENT
AGENT DE REVETEMENT POUVANT ETRE DEPOSE PAR VOIE ELECTRIQUE

(30) Priorität: 06.11.1995 DE 19541230
(43) Veröffentlichungstag der Anmeldung: 26.08.1998
(73) Patentinhaber: BASF Coatings Aktiengesellschaft, 48165 Münster (DE)
(72) Erfinder: BRÜCKEN, Thomas, D-48167 Münster (DE); OTT, Günther, D-48167 Münster (DE)
(74) Vertreter: Fitzner, Uwe, Dr.
(86) Internationale Anmeldenummer: EP9604835
(87) Internationale Veröffentlichungsnummer: WO9717408

(56) Entgegenhaltungen:
- EP-A- 0 059 468
- US-A- 3 640 926

## Beschreibung

Die vorliegende Erfindung betrifft ein elektrisch abscheidbares Überzugsmittel auf der Grundlage von basischen, thermisch vemetzbaren Epoxid- oder Polyurethanharzen.

Es ist bekannt, metallische Gegenstände mit Hilfe der Elektrotauchlackierung zu überziehen, wovon sowohl in der Automobilindustrie als auch in der sonstigen metallverarbeitenden Industrie Gebrauch gemacht wird. Hierzu werden im allgemeinen Elektrotauchlacksysteme bestehend aus einer wäßrigen Bindemitteldispersion und einer Pigmentpaste verwendet

An der Kathode elektrisch abscheidbare Harze sind z.B. in der US-PS 3617458 beschrieben. Es handelt sich um vemetzbare Überzugsmassen, die sich auf der Kathode ablagem. Diese Überzugsmassen leiten sich von einem ungesättigten Polymerisat, das Amingruppen und Carboxylgruppen enthält, und einem epoxidierten Material ab.

In der US-PS 3663389 werden kationisch-elektrisch ablagerbare Zusammensetzungen beschrieben, die Mischungen von bestimmten Amin-Aldehyd-Kondensaten und einer Vielzahl von kationischen harzartigen Materialien sind, wobei eines dieser Materialien durch Umsetzung eines organischen Polyepoxids mit einem sekundären Amin und Solubilisieren mit Säure hergestellt werden kann.

Aus der US-PS 3640926 sind wäßrige Dispersionen bekannt, die sich an der Kathode elektrisch ablagern lassen und aus einem Epoxiharzester, Wasser und tertiären Aminosalzen bestehen. Der Epoxiester ist das Reaktionsprodukt von Glycidylpolyether und einer ungesättigten Ölsäure.

Das Aminsalz ist das Reaktionsprodukt von einer aliphatischen Carbonsäure und einem tertiären Amin.

Wäßrige Überzugsmittel für die kathodische Elektrotauchlackierung enthaltend Bindemittel und Aminsalze sind bekannt, z.B. aus der US-PS 3640926. Die dort beschriebenen Bindemittel weisen jedoch den Nachteil auf, daß sie nicht wasserlöslich sind und daher mit Hilfe der verwendeten langkettigen Amine dispergiert oder emulgiert werden müssen.

Bindemittel auf Epoxid- und Polyurethanbasis zur Verwendung in Bindemitteldispersionen und Pigmentpasten sind darüber hinaus in zahlreichen Ausgestaltungen bekannt. Beispielsweise sei auf die DE-2701002, die EP-A-261385, die EP-A-004090 und die DE-PS 3630667 verwiesen.

Für bestimmte Anwendungen ist das Umgriffsverhalten bei allen bisher bekannten Systemen nicht ausreichend. D.h. die Lackverteilung zwischen außenliegenden, leicht zugänglichen Flächen und innenliegenden schwer zugänglichen Bereichen ist ungenügend. So erfordert beispielsweise eine ökonomische Beschichtung von Flachheizkörpem eine vollständige Beschichtung der durch Konvektoren gebildeten Hohlräume bei gleichzeitig dünnen Schichten auf den außenliegenden Flächen.

Aufgabe der vorliegenden Erfindung ist es demgemäß, ein elektrisch abscheidbares Überzugsmittel enthaltend Bindemittel, organische Lösemittel und Wasser sowie gegebenenfalls Pigmente, Füllstoffe, Korrosionsschutzinhibitoren, Lackhilfsmittel und Katalysatoren zur Verfügung zu stellen, das eine bessere Lackverteilung zwischen außenliegenden, leicht zugänglichen Flächen und innenliegenden schwer zugänglichen Bereichen gewährleistet, insbesondere die Beschichtung von Hohlräumen gegenüber dem genannten Stand der Technik verbessert.

Diese Aufgabe wird dadurch gelöst, daß das Überzugsmittel erhältlich ist, indem ihm ein mit deren Hauptbindemittel nicht reagierendes organisches Aminsalz zugesetzt wird.

Es ist erfingungswesentlich, daß die Aminsalze in dem Lackbad bzw. dem Überzugsmittel in ungebundener Form vorliegen. Daher kommen nur solche in Betracht, die nicht mit dem Bindemittel, insbesondere nicht mit der Hauptkomponente des Bindemittels reagieren. Dazu zählen erfingungsgemäßen vorzugsweise niedermolekulare Aminsalze, insbesondere Monoamine. Erfindungsgemäß ganz besonders bevorzugt sind Aminsalze mit einer zahlenmittleren Molmassenverteilung M ₙ < 500, höchst bevorzugt Mₙ < 300.

Als Amin können beispielsweiseTriethylamin, n-Butylamin, Diisopropylamin verwendet werden; bevorzugt sind Alkanolamine wie beispielsweise Ethanolamin, N-Methylethanolamin, Diethanolamin, Triethanolamin. Besonders bevorzugt ist N,N-Dimethylethanolamin.

Das organische Aminsalz liegt erfindungsgemäß vorzugsweise in einer Menge von 0,001 bis 5 Gew.-%, vorzugsweise 1 bis 3 Gew.-% in dem Lackbad vor. In einer bevorzugten Ausführungsform besteht demgemäß das elektrisch abscheidbare Überzugsmittel aus 30 bis 60 Gew.-%, vorzugsweise 34 bis 40 Gew.-% Bindemittel, 0,001 bis 5 Gew-%, vorzugsweise 1 bis 3 Gew.-% einer Zubereitung eines organischen Aminsalzes (wie nachfolgend beschrieben), 7 bis 15 Gew.-%, vorzugsweise 8 bis 10 Gew.-% Pigment und 20 bis 62 Gew.-%, vorzugsweise 47 bis 57 Gew.-% Wasser, Korrosionsschutzinhibitoren, Lackhilfsmitteln, organischen Lösemitteln und ggf. Katalysatoren.

Die genannten Aminsalze liegen zweckmäßigerweise in Form einer wäßrigen Aminsalzlösung, die durch Neutralisationsreaktion zwischen einem organischen Amin und einer organischen Säure in VE-Wasser hergestellt wird, in den erfindungsgemäßen Bindemittelsystemen vor. Die Mengen der Einsatzstoffe werden so gewählt, daß die Lösung einen pH-Wert von < 7, vorzugsweise von 5 bis 6 hat.

Als organische Säure können beispielsweise Ameisensäure, Essigsäure, Propionsäure oder Milchsäure eingesetzt werden. Bevorzugt werden Essigsäure und Milchsäure.

Diese Salzlösungen werden erfindungsgemäß in die Bindemitteldispersion oder in das Elektrotauchlackbad eingerührt. Zur Verhinderung von Koagulationserscheinungen sollte der Gehalt an Aminsalz in der wäßrigen Aminsalzlösung unter 70 % liegen. Bevorzugt sind Gehalte kleiner 40 %, besonders bevorzugt kleiner 25 %.

Der beschriebene Zusatz von Aminsalzen bzw. das Vorliegen von Aminsaizen in ungebundener Form in dem Lackbad und die damit verbundenen Wirkungen sind deshalb besonders überraschend, weil bisher stets auf eine vollständige Umsetzung der Aminkömponenten geachtet wurde. Der Fachmann ging nämlich davon aus, daß das Umgriffsvermögen mit zunehmender Aminkonzentration fällt (vgl. z.B. Machu, Elektrotauchlackierung, Verlag Chemie, 1974, Seite 67/68).

Das erfindungsgemäß elektrisch abscheidbare Überzugsmittel, zu dem die beschriebenen Aminsalze zugesetzt werden, enthält vorzugsweise an der Kathode elektrisch abscheidbare Harze.

Die Harze enthalten Bindemittel auf der Basis von Polyurethan- oder Epoxidharzen, die durch Umsetzung mit basischen Aminoverbindungen hergestellt worden sind.

In einer bevorzugten Ausführungsform enthält das Elektrotauchlacküberzugsmittel 55 bis 95 Gew.-%, bezogen auf die Gesamtmenge des Bindemittels, eines primäre und/oder sekundäre und gegebenenfalls auch tertiäre Aminogruppen enthaltendes organisches Kunstharz -Bindemittels mit einem mittleren Molekulargewicht (Mn) von etwa 500 bis 10.000, das einen pk_{b} -Wert von etwa 3 bis 7.0, vorzugsweise 3 bis 5.5, besonders bevorzugt 3.5 bis 6 und eine Aminzahl von etwa 30 bis 150 aufweist, und 5 bis 45 Gew.-% eines Vemetzungsmittels mit einem mittleren Molekulargewicht (Mn) von etwa 500 bis 5.000.

Bevorzugt sind erfindungsgemäß die Elektrotauchlackbäder, die kationische, aminmodifizierte Epoxidharze als kathodisch abscheidbare Kunstharze enthalten Es sind sowohl selbst als auch fremdvemetzende aminmodifizierte Epoxidharze bekannt. Bevorzugt werden fremdvemetzende aminmodifizierte Epoxidharze eingesetzt.

Unter aminmodifizierten Epoxidharzen werden kationische Reaktionsprodukte aus
(A) ggf. modifizierten Polyepoxiden,
(B) primären und/oder sekundären Aminen bzw. deren Salzen und/oder Salzen von tertiären Aminen und gegebenenfalls
(C) Polyolen, Polycarbonsäuren, Polyaminen oder Polysulfiden
verstanden.

Unter Polyepoxiden werden Verbindungen verstanden, die zwei oder mehr Epoxidgruppen im Molekül enthalten.

Zur Herstellung der aminmodifizierten Epoxidharze sind als Komponente (A) alle Verbindungen geeignet, die zwei oder mehr Epoxidgruppen im Molekül enthalten. Bevorzugt sind solche Verbindungen, die zwei Epoxidgruppen im Molekül enthalten.

Besonders bevorzugte (A)-Komponenten sind Verbindungen, die herstellbar sind durch Umsetzung von
(a) einer Diepoxidverbindung oder eines Gemisches von Diepoxidverbindungen mit einem Epoxidäquivalentgewicht unter 2000 mit
(b) einer unter den gegebenen Reaktionsbedingungen gegenüber Epoxidgruppen monofunktionell reagierenden, eine Phenol- oder Thiolgruppe enthaltenden Verbindung oder eines Gemisches solcher Verbindungen,
wobei die Komponenten (a) und (b) in einem Molverhältnis von 10:1 bis 1:1, bevorzugt 4:1 bis 1,5:1, eingesetzt werden und die Umsetzung der Komponente (a) mit der Komponente (b) bei 100 bis 190 ° C gegebenenfalls in Anwesenheit eines Katalysators durchgeführt wird (vgl. DE-OS-35 18 770).

Weitere besonders bevorzugte (A)-Komponenten sind Verbindungen, die herstellbar sind durch eine bei 100 bis 195 ° C gegebenenfalls in Anwesenheit eines Katalysators durchgeführten, durch einen monofunktionell reagierenden Starter, der entweder eine alkoholische OH-Gruppe, eine phenolische OH-Gruppe oder eine SH-Gruppe trägt, initiierten Polyaddition einer Diepoxidverbindung und/oder eines Gemisches von Diepoxidverbindungen, gegebenenfalls zusammen mit mindestens einer Monoepoxidverbindung, zu einem Epoxidharz, in dem Diepoxidverbindung und Starter in einem Molverhältnis von größer 2:1 bis 10:1 eingebaut sind (vgl. DE-OS-35 18 732).
Polyepoxide, die zur Herstellung der besonders bevorzugten (A)-Komponenten und auch selbst als (A)-Komponenten einsetzbar sind, sind aus Polyphenolen und Epihalohydrinen hergestellte Polyglycidylether von Polyphenolen. Als Polyphenole können z. B. ganz besonders bevorzugt Bisphenol A und Bisphenol F eingesetzt werden. Außerdem sind auch 4,4'-Dihydroxybenzophenon, Bis-(4-hydroxyphenyl)-1,1-ethan, Bis-(4-hydroxyphenyl)-1,1-isobutan, Bis-(4-hydroxy-tertiär-butylphenyl)2,2-propan, Bis-(2-hydroxynaphthyl)-methan, 1,5-Dihydroxynaphthalin und phenolische Novolakharze geeignet.

Weitere geeignete Polyepoxide sind Polyglycidether von mehrwertigen Alkoholen, wie z. B. Ethylenglykol, Diethylenglykol, Triethylenglykol, 1,2-Propylenglykol, 1,4-Propylenglykol, 1,5-Pentandiol, 1,2,6-Hexantriol, Glycerin und Bis-(4-hydroxycyclohexyl-)2,2-propan.

Es können auch Polyglycidylester von Polycarbonsäuren, wie z. B. Oxalsäure, Bernsteinsäure, Glutarsäure, Terephthalsäure, 2,6-Naphthalindicarbonsäure, dimerisierte Linolsäure eingesetzt werden. Typische Beispiele sind Glycidyladipat und Glycidylphthalat.

Ferner sind Hydantoinepoxide, epoxidiertes Polybutadien und Polyepoxidverbindungen geeignet, die man durch Epoxidierung einer olefinisch ungesättigten aliphatischen Verbindung erhält.

Unter modifizierten Polyepoxiden werden Polyepoxide verstanden, in denen ein Teil der reaktionsfähigen Gruppen mit einer modifizierenden Verbindung umgesetzt worden ist.

Als Beispiele für modifizierende Verbindungen werden genannt:
a) Carboxylgruppenhaltige Verbindungen wie gesättigte oder ungesättigte Monocarbonsäuren (z.B. Benzoesäure, Leinölfettsäure, 2-Ethylhexansäure, Versaticsäure), aliphatische, cycloaliphatische und/oder aromatische Dicarbonsäuren verschiedener Kettenlänge (z.B. Adipinsäure, Sebacinsäure, Isophthalsäure oder dimere Fettsäuren), Hydroxialkylcarbonsäuren (z.B. Milchsäure, Dimethylolpropionsäure) sowie carboxylgruppenhaltige Polyester oder
b) aminogruppenhaltige Verbindungen wie Diethylamin oder Ethylhexylamin oder Diamine mit sekundären Aminogruppen, z.B. N,N'-Dialkylalkylendiamine wie Dimethylethylendiamin, N,N'-Dialkylpolyoxialkylenamine wie N,N'-dimethylpolyoxipropylendiamin, cyanalkylierte Alkylendiamine wie Bis-N,N'-Cyanethyl-ethylendiamin, cyanalkylierte Polyoxialkylenamine wie Bis-N,N'-Cyanethylpolyoxipropylendiamin, Polyaminoamide wie z. B. Versamide, insbesondere endständige Aminogruppen enthaltende Umsetzungsprodukte aus Diaminen (z. B. Hexymethylendiamin), Polycarbonsäuren, insbesondere Dimerfettsäuren und Monocarbonsäuren, insbesondere Fettsäuren, oder das Umsetzungsprodukt von einem Mol Diaminohexan mit zwei Molen Monoglycidylether oder Monoglycidylester, speziell Glydidylester α-verzweigter Fettsäuren wie der Versaticsäure, oder
c) hydroxylgruppenhaltige Verbindungen wie Neopentylglykol, Bisethoxiliertes Neopentylglykol. Hydroxipivalinsäureneopentylglykolester, Dimethylhydantoin-N,N'diethanol, Hexandiol-1,6, Hexandiol-2,5, 1,4-Bis-(hydroximethyl)cyclohexan, 1,1-Isopropyliden-bis-(p-phenoxi)-2-propanol, Trimethylolpropan, Pentaerythrit oder Aminoalkohole wie Triethanolamin, Methyldiethanolamin oder hydroxylgruppenhaltige Alkylketimine wie Aminomethylpropandiol-1,3 methyl-isobutylketimin oder Tris-(hydroximethyl)-aminomethan-cyclohexanonketimin sowie auch Polyglykolether, Polyesterpolyole, Polyetherpolyole, Polycaprolactonpolyole, Polycaprolactampolyole verschiedener Funktionalität und Molekulargewichte oder
d) gesättigte oder ungesättigte Fettsäuremethylester, die in Gegenwart von Natriummethylat mit Hydroxylgruppen der Epoxidharze umgesetzt werden.

Als Komponente (B) können primäre und/oder sekundäre Amine bzw. deren Salze und/oder Salze von tertiären Aminen verwendet werden, wobei die sekundären Amine besonders bevorzugte Komponenten (B) sind.

Bevorzugt sollte das Amin eine in Wasser lösliche Verbindung sein. Beispiele solcher Amine sind Mono- und Dialkylamine, wie Methylamin, Ethylamin, Propylamin, Butylamin, Dimethylamin, Diethylamin, Dipropylamin, Methylbutylamin u. dgl.. Geeignet sind ebenfalls Alkanolamine, wie z.B. Methylethanolamin, Diethanolamin u. dgl. Ferner sind Dialkylaminoalkylamine, wie z.B. Dimethylaminoethylamin, Diethylaminopropylamin, Dimethylaminopropylamin und dgl. geeignet. In den meisten Fällen werden niedermolekulare Amine verwendet, doch ist es auch möglich, höhermolekulare Monoamine anzuwenden.

Polyamine mit primären und sekundären Aminogruppen können in Form ihrer Ketimine mit den Epoxidgruppen umgesetzt werden. Die Ketimine werden aus den Polyaminen in bekannter Weise hergestellt.

Die Amine können auch noch andere Gruppen enthalten, doch sollen diese die Umsetzung des Amins mit der Epoxidgruppe nicht stören und auch nicht zu einer Gelierung der Reaktionsmischung führen.

Die für die Wasserverdünnbarkeit und elektrische Abscheidung erforderlichen Ladungen können durch Protonisierung mit wasserlöslichen Säuren (z.B., Borsäure, Ameisensäure, Milchsäure, bevorzugt Essigsäure) oder auch durch Umsetzung der Oxirangruppen mit Salzen eines Amins erzeugt werden.

Als Salz eines Amins kann das Salz eines tertiären Amins verwendet werden.

Der Aminanteil des Amin-Säuresalzes ist ein Amin, das unsubstituiert oder substituiert wie im Falle des Hydroxylamins sein kann, wobei diese Substituenten die Umsetzung des Amin-Säuresalzes mit dem Polyepoxid nicht stören sollen und die Reaktionsmischung nicht gelieren soll. Bevorzugte Amine sind tertiäre Amine, wie Dimethylethanolamin, Triethylamin, Trimethylamin, Triisapropylamin u. dgl. Beispiele von anderen geeigneten Aminen sind in der US-PS 38 39 252 in Spalte 5, Zeile 3, bis Spalte 7, Zeile 42, angegeben.

Als Komponente (C) werden Polyole, Polycarbonsäuren, Polyamine oder Polysulfide bzw. Gemische aus Verbindungen dieser Stoffklassen eingesetzt.

Die in Betracht kommenden Polyole schließen Diole, Triole und höhere polymere Polyole, wie Polyesterpolyole, Polyetherpolyole, ein.

Für die Komponente (C) geeignete Polyalkylenetherpolyole entsprechen der allgemeinen Formel

H -----[ O ----- (CHR)ₙ]ₘ-----OH

in der R = Wasserstoff oder ein niedriger Alkylrest, ggf. mit verschiedenen Substituenten, ist, n = 2 bis 6 und m = 3 bis 50 oder noch höher ist. Beispiele sind Poly(oxytetramethylen)glykole und Poly(oxyethylen)glykole sowie Poly (oxypropylen)glycole.

Wenn Polyetherpolyole, die durch Umsetzung eines cyclischen Polyols, wie z.B. Bisphenol A, mit Ethylenoxid oder einer Mischung aus Ethylenoxid mit einem Alkylenoxid, das 3 bis 8 C-Atome enthält, erhältlich sind, als Komponente (C) eingesetzt werden, dann werden besonders bevorzugte kationische, aminmodifizierte Epoxidharze erhalten (vgl. EP-A-74634).

Polyesterpolyole können ebenfalls als polymere Polyolkomponente verwendet werden. Man kann die Polyesterpolyole durch Polyveresterung von organischen Polycarbonsäuren oder ihren Anhydriden mit organischen Polyolen, die primäre Hydroxylgruppen enthalten, herstellen. Üblicherweise sind die Polycarbonsäuren und die Polyole aliphatische oder aromatische Dicarbonsäuren und Diole.

Die zur Herstellung der Polyester verwendeten Diole schließen Alkylenglykole wie Ethylenglykol, Butylenglykol, Neopentylglykol und andere Glykole, wie Cyclohexandimethanol, ein.

Die Säurekomponente des Polyesters besteht in erster Linie aus niedermolekularen Carbonsäuren oder ihren Anhydriden mit 2 bis 18 Kohlenstoffatomen im Molekül. Geeignete Säuren sind beispielsweise Phthalsäure, Isophthalsäure, Terephthalsäure, Tetrahydrophthalsäure, Hexahydrophthalsäure, Adipinsäure, Azelainsäure, Sebazinsäure, Maleinsäure und Glutarsäure. Anstelle dieser Säuren können auch ihre Anhydride, soweit diese existieren, verwendet werden.

Ferner lassen sich auch Polyesterpolyole, die sich von Lactonen ableiten, als Komponente (C) benutzen. Diese Produkte erhält man durch die Umsetzung eines ε-Caprolactons mit einem Polyol. Solche Produkte sind in der US-PS 3 169 945 beschrieben.

Die Polylactonpolyole, die man durch diese Umsetzung erhält, zeichnen sich durch die Gegenwart einer endständigen Hydroxylgruppe und durch wiederkehrende Polyesteranteile, die sich von dem Lacton ableiten, aus, Diese wiederkehrenden Molekülanteile können der Formel 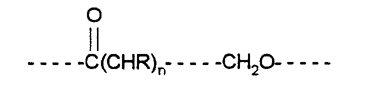 entsprechen, in der n mindestens 4, bevorzugt 4 bis 6 ist und der Substituent Wasserstoff, ein Alkylrest, ein Cycloalkylrest oder ein Alkoxylrest ist.

Als Komponente (C) werden auch aliphatische und/oder alicyclische polyfunktionelle Alkohole oder Carbonsäuren mit einem Molekulargewicht unter 350 eingesetzt. Vorteilhaft weisen diese eine verzweigte aliphatische Kette, insbesondere mit mindestens einer Neostruktur, auf.

Geeignete Verbindungen entsprechen der folgenden allgemeinen Form 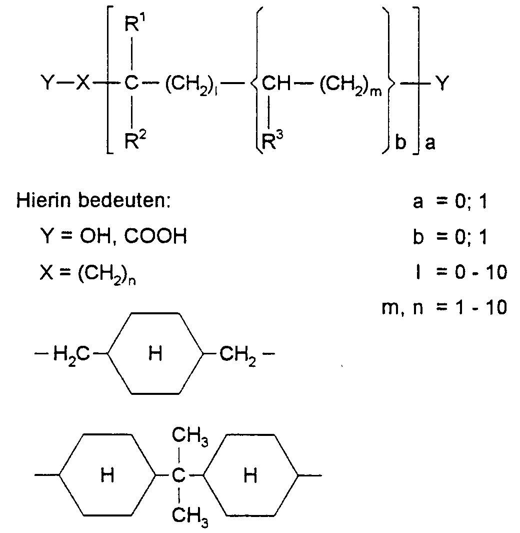 R¹ R ² R³ = H, Alkylrest mit 1 bis 5 C-Atomen.

Als Beispiele seien genannt: Diole, wie Ethylenglykol, Diglykol, Dipropylenglykol, Dibutylenglykol, Triglykol, 1,2-Propandiol, 1,3-Propandiol, 2,2-Dimethyl-1,3-propandiol, 2,2-Diethyl-1,3-propandiol, 2-Methyl-2-ethyl-1,3-propandiol, 2-Methyl-2-propyl-1,3-propandiol, 2-Ethyl-2-butyl-1,3-propandiol,- 1,2-Butandiol, 1,4-Butandiol, 2,3-Butandiol, 2-Ethyl 1,4-butandiol, 2,2-Diethyl-1,3-butandiol, Buten-2-diol-1,4, 1,2-Pentandiol, 1,5-Pentandiol, 3-Methyl-1,5-pentandiol, 1,6-Hexandiol, 2,5-Hexandiol, 2-Ethyl-1,3-hexandiol, 2,5-Dimethyl-2,5-hexandiol, 1,3-Octandiol, 4,5-Nonandiol, 2,10 Decandiol, 2-Hydroxyethylhydroxyacetat, 2,2-Dimethyl-3hydroxypropyl-2,2-dimethylhydroxypropionat, 2-Methyl-2 propyl-3-hydroxypropyl-2-methyl-2-propylhydroxypropionat, 4,4'-Methylenbiscyclohexanol und 4,41-Isopropylidenbiscyclohexanol. Einige bevorzugte Diole sind 2,2-Dimethyl-1,3 propandiol, 3-Methyl-1,5-pentandiol, 2,2-Dimethyl-3-hydroxy-propyl-2,2-dimethylhydroxypropionat und 4.41-Isopropylidenbiscyclohexanol.

Als Carbonsäuren kommen eine Vielzahl von Dicarbonsäuren in Betracht, wie Oxalsäure, Malonsäure, 2,2-Dimethylmalonsäure, Bernsteinsäure, Glutarsäure, Adipinsäure, Hexahydrophthalsäure, Maleinsäure, Fumarsäure, Pimelinsäure, Korksäure, Azelainsäure, Sebazinsäure, Itaconsäure, Citraconsäure und Mesaconsäure.

Bevorzugt eingesetzte Dicarbonsäuren sind z.B. 2,2-Dimethylmalonsäure und Hexahydrophthalsäure.

Es können auch langkettige Dicarbonsäuren als Komponente (C) eingesetzt werden. Beispiele hierfür sind Dimerfettsäuren, wie etwa die dimere Linolsäure.

Als Komponente (C) geeignete Polyamine kann man z.B. durch Umsetzung von primären Diaminen und Monoepoxiden darstellen, Die gebildeten sekundären substituierten Diamine modifizieren die Epoxidharze in geeigneter Weise.

Als Komponente (C) können auch primär-tertiäre Diamine oder Alkanolamine wie Aminoethanol oder Aminopropanol verwendet werden.

Als polyfunktionelle SH-Verbindungen kommen Umsetzungsprodukte von organischen Dihalogeniden mit Natriumpolysulfid in Betracht, Weitere SH-Verbindungen sind z.B. Umsetzungsprodukte von hydroxylgruppenhaltigen linearen Polyestern, Polyethern oder Polyurethanen mit Mercaptocarbonsäuren wie Mercaptoessigsäure, 2-Mercaptopropionsäure; 3-Mercaptopropionsäure, Mercaptobuttersäure und ähnliche.

Ganz besonders bevorzugte Elektrotauchlackbäder werden erhalten, wenn als kationische, aminmodifizierte Epoxidharze Umsetzungsprodukte aus (A) Polyepoxiden, (B) primären und/oder sekundären Aminen bzw. deren Salze und/oder Salzen von tertiären Aminen und (C)-Polyolen, insbesondere Polyester- und/oder Polyetherpolyolen, eingesetzt werden.

Die aminmodifizierten Epoxidharze können sowohl als fremdvernetzende Kunstharze als auch als selbstvernetzende Kunstharze eingesetzt werden, Selbstvernetzende aminmodifizierte Epoxidharze können beispielsweise durch chemische Modifikation der aminmodifizierten Epoxidharze erhalten werden. Ein selbstvernetzendes System kann z.B. dadurch erhalten werden, daß das aminmodifizierte Epoxidharz mit einem teilblockierten Polyisocyanat, das im Durchschnitt eine freie Isocyanatgruppe pro Molekül besitzt und dessen blockierte Isocyanatgruppen erst bei erhöhten Temperaturen entblockt werden, umgesetzt wird.

Das Kunstharz-Bindemittel kann entweder allein oder als Gemisch mehrerer Typen mit dem zugehörigen Vernetzungsmittel eingesetzt werden. So kann es z.B. zur Abstimmung der mechanischen und elektrischen Eigenschaften notwendig sein, daß beispielsweise ein aminogruppenhaltiges Epoxiaminharz mit einem Polyaminoamidharz gemischt wird.

Bevorzugte Lacke werden erhalten, wenn als fremdvernetzende aminmodifizierte Epoxidharze in Kombination mit einem geeigneten Vernetzungsmittel eingesetzt werden.

Beispiele für geeignete Vernetzungsmittel sind Phenoplaste, polyfunktionelle Mannichbasen, Melaminharze, Benzoguanaminharze, blockierte Polyisocyanate und Verbindungen, die mindestens zwei Gruppierungen der allgemeinen Formel R¹-O-CO- enthalten.

Der Rest R¹ bedeutet:
R¹ = R²-O-CO-CH₂-, R³-CHOH-CH₂-, R⁴-CHOR⁵-CHOH-CH₂-
R² = Alkyl
R³ = H, Alkyl, R6-O-CH2- oder R⁶-CO-O-CH₂-
R⁴ = H oder Alkyl
R⁵ = H, Alkyl oder Aryl
R⁶ = Alkyl, Cycloalkyl oder Aryl

Bevorzugte Elektrotauchlackbäder werden erhalten, wenn als Vernetzungsmittel blockierte Polyisocyanate und/oder Verbindungen, die mindestens zwei Gruppierungen der allgemeinen Formel R ¹- O-COenthalten, eingesetzt werden.

Als blockierte Polyisocyanate können beliebige Polyisocyanate benutzt werden, bei denen die Isocyanatgruppen mit einer Verbindung umgesetzt worden sind, so daß das gebildete blockierte Polyisocyanat gegenüber Hydroxyl- und Aminogruppen bei Raumtemperatur beständig ist, bei erhöhten Temperaturen, in der Regel im Bereich von etwa 90°C bis etwa 300 ° C, aber reagiert. Bei der Herstellung der blockierten Polyisocyanate können beliebige für die Vernetzung geeignete organische Polyisocyanate verwendet werden. Bevorzugt sind die Isocyanate, die etwa 3 bis 36, insbesondere etwa 8 bis etwa 15 Kohlenstoffatome enthalten. Beispiele geeigneter Diisocyanate sind Hexamethylendiisocyanat, 2,4-Toluylendiisocyanat, 2,6-Toluylendiisocyanat und 1-Isocyanatomethyl 5-isocyanato-1,3,3-trimethylcyclohexan. Es können auch Polyisocyanate von höherer Isocyanatfunktionalität verwendet werden. Beispiele dafür sind trimerisiertes Hexamethylendiisocyanat und trimerisiertes Isophorondiisocyanat. Ferner kann man auch Mischungen von Polyisocyanaten benutzen, Die bei der Erfindung als Vernetzungsmittel in Betracht kommenden organischen Polyisocyanate können auch Präpolymere sein, die sich beispielsweise von einem Polyol einschließlich eines Polyetherpolyols oder eines Polyesterpolyols ableiten.

Für die Blockierung der Polyisocyanate können beliebige geeignete aliphatische, cycloaliphatische oder aromatische Alkylmonoalkohole verwendet werden, Beispiele dafür sind aliphatische Alkohole, wie Methyl-, Ethyl-, Chlorethyl-, Propyl-, Butyl-, Amyl-, Hexyl-, Heptyl-, Octyl-, Nonyl-, 3,3,5-Trimethylhexyl-, Decyl- und Laurylalkohal; cycloaliphatische Alkohole wie Cyclopentanol und Cyclohexanol; aromatische Alkylalkohole, wie Phenylcarbinol und Methylphenylcarbinol. Ferner geeignet sind Ethoxilierungs- oder Propoxilierungsprodukte der genannten Alkohole. Beispiele hierfür sind Butylglycol, Butyldiglycol sowie Propylenglycolmethylether.

Andere geeignete Blockierungsmittel sind Hydroxylamine wie Ethanolamin, Oxime wie Methylethylketonoxim, Acetonoxim und Cyclohexanonoxim oder Amine wie Dibutylamin und Diisopropylamin. Die genannten Polyisocyanate und Blockierungsmittel können bei geeigneten Mengenverhältnissen auch zur Herstellung der oben erwähnten teilblockierten Polyisocyanate verwendet werden.

Beispiele für Verbindungen, die mindestens zwei Gruppierungen der allgemeinen Formel R¹-O-CO- enthalten, sind Bis(carbalkoxymethyl)azelat, Bis-(carbalkoxymethyl)sebacat, Bis-(carbalkoxymethyl)adipat, Bis-(carbalkoxymethyl)decanat, Bis-(carbalkoxymethyl)terephthalat, Bis-(2-hydroxybutyl)-acelat und Bis-(2-hydroxyethyl)terephthalat.

Das Vernetzungsmittel wird in der Regel in einer Menge von 5 bis 60 Gew.-%, bevorzugt 20 bis 40 Gew.-%, bezogen auf das aminmodifizierte Epoxidharz, eingesetzt. Die Mengenangaben beziehen sich auf die Festkörperanteile.

Die in Rede stehenden Lacke können ein Homo- oder Copolymer eines Alkylvinylethers der allgemeinen Formel CH₂ = CH-O-R enthalten, wobei R für einen Alkylrest mit 2 bis 4 C-Atomen steht.

Derartige Homo- bzw. Copolymere werden durch Polymerisation eines Alkylvinylethers gegebenenfalls zusammen mit weiteren copolymerisierbaren Monomeren hergestellt, Die Polymerisation erfolgt nach gut bekannten Methoden, vorzugsweise kationisch.

Einsetzbar sind z.B. die Homo- bzw. Copolymere, die erhältlich sind durch Polymerisation von
- 80 bis 100 Gew.-% eines Alkylvinylethers der allgemeinen Formel CH ₂ =CH-O-R, wobei R für einen Alkylrest mit 2 bis 4 C-Atomen, bevorzugt für einen Ethylrest, steht, gegebenenfalls zusammen mit
- bis zu 20 Gew.-% eines copolymerisierbaren Monomeren bzw. eines copolymerisierbaren Monomerengemisches.

Das mittlere Molekulargewicht (Gewichtsmittel) der erhaltenen Polymere sollte im Bereich von 5 x 10² bis 1 x 10⁵ g/Mol, vorzugsweise im Bereich von 1 x 10³ bis 5 x 10⁴ g/Mol, liegen.

Das oben genannte mittlere Molekulargewicht kann z.B. gelpermeationschromatographisch z.B. unter folgenden Bedingungen ermittelt werden:
Säulentyp: Zwei Säulen mit einem vernetzten Polymer auf Basis von Styrol und Divinylbenzol als Säulenmaterial (PL-Gel 5 µ mixed Säulen, Hersteller: Polymer Laboratories) mit PL Vorsäule; Abmessungen der beiden erstgenannten Säulen: 300 x 7,5 mm.
Detektortyp: RI (refraction index) Detektor, Knauer Differentialrefraktometer, Stufe 8
Mobile Phase: Tetrahydrofuran
Probenkonzentration: ca. 2%ig in Tetrahydrofuran
Injiziertes Probenvolumen: 50 µl
Probenflußrate: 0,8 ml/min
Eichung: 10 Polystyrolstandards mit bekannter Molmasse von ca. 600 bis 400000, Erstellung der Eichgeraden mittels linearer Regression,

Bevorzugt eingesetzte Alkylvinylethermonomere sind Ethyl- und (Iso-) Propylvinylether, z.B. werden Ethylvinylether beziehungsweise deren Homopolymere eingesetzt.

Als Beispiele für mit Alkylvinylethern copolymerisierbare Monomere werden Styrol und Alkyl(meth)acrylate wie z.B. Ethyl(meth)acrylat und Methyl(meth)acrylat genannt.

Es gibt mehrere Möglichkeiten, die Alkylvinyletherhomo- oder - copolymere in Lacke einzuarbeiten. Die Alkylvinyletherhomo- oder - copolymere werden vorzugsweise in die Pigmentpaste oder in die organische Kunstharzlösung bzw. -dispersion eingearbeitet. Dabei kann es vorteilhaft sein, die in Rede stehenden Polymere in einem geeigneten Lösungsmittel (z.B. Butanol, Ethylacetat, Butylglykol, Methylisobutylketon oder Testbenzin) anzulösen. In manchen Fällen kann es nützlich sein, Emulgatoren mitzuverwenden.

Prinzipiell gesehen können die Alkylvinyletherhomo- oder -copolymere zu jedem Zeitpunkt der Herstellung und auch nach Fertigstellung der Lacke in die Elektrotauchlackbäder inkorporiert werden.

Die Alkylvinyletherhomo- oder -copolymere können in solchen Mengen in die erfindungsgemäßen Lacke eingearbeitet werden, daß diese vorzugsweise 10 bis 10000 ppm, besonders bevorzugt 100 bis 1500 ppm. ganz besonders bevorzugt 150 bis 500 ppm. des Alkylvinyletherhomooder -copolymers enthalten (die Angabe ppm. - parts per million - ist auf Gewichtsteile bezogen).

Es ist selbstverständlich, daß auch Mischungen unterschiedlicher Alkylvinyletherhomo- oder -copolymere eingesetzt werden können. Durch die genannten Alkylvinyletherpolymere kann eine erhöhte Resistenz gegenüber Ölkontaminationskratern im Elektrotauchlackbad erreicht werden.

Außerdem ist es zum Ausbalancieren der anwendungstechnischen Eigenschaften möglich, in die kathodisch abscheidbaren Bindemittel außer den beschriebenen Vernetzungsmitteln in geringem Umfang noch weitere modifizierende Harze einzuemulgieren. Als solche können dienen Styrol-Allylalkohol Copolymere, OH-gruppenhaltige Acrylcopolymere, blockierte Isocyanate, sowie Amin- und Phenol-Formaldehyd-Harze.

Die Wasserlöslichkeit wird durch Salzbildung der aminogruppenhaltigen Harze mit sauren Verbindungen erzielt. Hierzu eignen sich beispielsweise Essigsäure, Milchsäure, Ameisensäure, Propionsäure usw. Mit Wasser verdünnbare, als Bindemittel dienende kationische Harze können hergestellt werden, indem man dem basischen Harz 0.2 bis 1.2 Äquivalente, vorzugsweise 0.4 bis 1.0 Äquivalente der protonisierenden Säure bezogen auf das basische Stickstoffatom im Harz zusetzt und das Gemisch bei Temperaturen von etwa 20 bis 90 °C gut rührt. Von der Herstellung der Harze eingeschleppte störende Lösungsmittel werden im Vakuum abdestilliert. Das Überzugsmittel kann zur Senkung der Viskosität, zur Steuerung der Abscheidespannung und zur Verbesserung des Verlaufs bis zu ungefähr 3 Gew.-% organische Lösungsmittel enthalten. Es können hierbei wasserlösliche Lösungsmittel wie Alkohole, Glykolether, Ketoalkohole oder geringe Anteile nicht wasserlöslicher Lösungsmittel wie Kohlenwasserstoffe verschiedener Kettenlänge verwendet werden. Es wird ein möglichst niedriger Gehalt an organischen Lösungsmitteln angestrebt.

In den erfindungsgemäßen Überzugsmitteln können die ansich bekannten Pigmente verwendet werden. D.h. es kommen sowohl anorganische als auch organische Pigmente zum Einsatz. So lassen sich Weißpigmente (z.B. Titandioxid), Schwarzpigmente (z.B. Magnesit, Trieisentetroxid), Buntpigmente (z.B. Eisenoxid, Chromoxid), reflektierende Metallpigmente (z.B.Aluminiumbronzen) oder Korrosionsschutzpigmente einsetzen. Als organische Pigmente sind beispielhaft Azo-, Triphenylmethan-, Carbonylund Dioxazinpigmente zu erwähnen.

Die Pigmente werden vorzugsweise in Form einer Pigmentpaste in die wäßrige Dispersion der Harze eingearbeitet.

Die Herstellung von Pigmentpasten ist allgemein bekannt und braucht hier nicht näher erläutert zu werden (vgl. D.H. Parker, Principles of Surface Coating Technology, Intersience Publishers, New York (1965); R.L. Yates, Electropainting, Robert Draper Ltd., Teddington/England (1966); H.F. Payne, Organic Coating Technology, Band 2, Wiley and Sons, New York (1961)).

Zur Herstellung der Pigmentpasten sind die vorstehend beschriebenen kationischen, aminmodifizierten Epoxidharze geeignet. Es können jedoch auch z.B. quarternäre Ammoniumgruppen enthaltende Epoxid-Aminaddukte eingesetzt werden. Die Pigmentpaste kann neben den Pigmenten auch noch Weichmacher, Füllstoffe, Netzmittel usw. enthalten.

Die Pigmentpaste wird in einer solchen Menge zur wäßrigen Dispersion des Kunstharzes gegeben, daß der fertige Lack die für die Abscheidung erforderlichen Eigenschaften aufweist. In den meisten Fällen beträgt das Gewichtsverhältnis zwischen Pigment und Kunstharz 0,05 bis 0,5.

Ferner kommen in den Überzugsmitteln die dem Fachmann bekannten Füllstoffe zum Einsatz. Hierzu zählen u.a. Silikatische Füllstoffe (z.B. Aluminiumsilikat, Talkum, Kieselerde, Eisenglimmer, Siliciumcarbid, Quarzmehl, Kieselgur) und sulfatische Füllstoffe (z.B. Bariumsulfat, Calciumsulfat).

Schließlich sind in den Überzugsmitteln übliche Lackhilfsmittel vorhanden, z. B. Weichmacher und andere Lackadditive (z.B.Dispergierhilfen, Emulgatoren), Verdickungs- und Thixotropierungsmittel, Schaumverhinderungsmittel, Verlaufsmittel und andere Hilfen gegen Oberflächenstörungen, Stabilisatoren und/oder UV-Absorber.

Die Herstellung von Pigmentpasten ist allgemein bekannt und braucht hier nicht näher erläutert zu werden (vgl. D.H. Parker, Principles of Surface Coating Technology, Intersience Publishers, New York (1965); R.L. Yates, Electropainting, Robert Draper Ltd., Teddington/England (1966); H.F. Payne, Organic Coating Technology, Band 2, Wiley and Sons, New York (1961)).

Das erfindungsgemäße Überzugsmittel läßt sich auf allen elektrisch abscheidbaren Substraten abscheiden, vorzugsweise auf Metallen. Aufgrund des verbesserten Umgriffsvermögens ist es besonders zur Beschichtung von Heizkörpern geeignet.

Zur Beschichtung von Substraten wird das Elektrotauchlackbad mit einer elektrisch leitenden Anode und mit dem als Kathode geschalteten elektrisch leitfähigen Substrat in Berührung gebracht. Beim Durchgang von elektrisches Strom zwischen Anode und Kathode wird ein fest haftender Lackfilm auf der Kathode abgeschieden.

Bei dem Verfahren zu Beschichten der elektrisch leitfähigen Substrate wird demgemäß z.B. wie folgt vorgegangen:
1) das Substrat wird in ein wäßriges Elektrotauchlackbad, das mindestens ein kathodisch abscheidbares Kunstharz enthält, eingetaucht,
2) das Substrat wird als Kathode geschaltet,
3) durch Gleichstrom wird ein Film auf dem Substrat abgeschieden,
4) das Substrat wird aus dem Elektrotauchlack entfernt und
5) der abgeschiedene Lackfilm eingebrannt.

Als Anode werden z.B. elektrisch leitfähige und nicht korrodierende Elektroden beispielsweise aus nichtrostendem Stahl oder Graphit verwendet. Der kathodisch zu beschichtende Gegenstand und die Anode werden in gleicher Weise, wie für die elektrophoretische Abscheidung bisher bekannt ist, in ein wäßriges Bad getaucht. Während der Abscheidung wird das Bad bei zweckmäßig Temperaturen von 15bis 35, bevorzugt von 20 bis 30 °C gehalten. Festkörper, Abscheidetemperatur und -zeit, sowie Spannung werden so gewählt, daß die gewünschte Schichtstärke auf dem Blech nach Abspülen und Einbrennen erhalten wird.

Der Feststoffgehalt des Abscheidungsbades, in dem das Überzugsmittel gemäß der Erfindung in verdünnter Form enthalten ist, beträgt nach dem Verdünnen mit Wasser zweckmäßig 5 bis 30 Gew.-%, vorzugsweise 10 bis 20 Gew.-%. Der pH-Wert des Bades liegt im allgemeinen unter 7, vorzugsweise zwischen 5.5 und 6.8.

Die angelegte Spannung kann in einem großen Bereich schwanken und z.B. zwischen zwei und tausend Volt liegen. Typischerweise wird heute mit Spannungen zwischen 50 und 500 Volt gearbeitet. Überraschenderweise kann bei Einsatz der erfingungsgemäß bevorzugten Aminsalze jedoch mit sehr niedrigen Spannungen gearbeitet werden. Die Stromdichte liegt in der Regel zwischen 10 und 100 Amp./m². Im Verlauf der Abschreibung bleibt die Stromdichte zum Abfallen.

Nach der Abscheidung wird der beschichtete Gegenstand abgespült und ist zum Einbrennen bereit.

Im folgenden wird die Erfindung unter Bezugnahme auf die Beispiele näher beschrieben:

### Beispiele

### 1. Herstellung eines Vernetzers

In einem geeigneten Reaktionsgefäß werden unter Stickstoff 2440 Teile triisocyanuratisiertes Hexamethylendiisocyanat vorgelegt und mit 850 Teilen Methylisobutylketon (MIBK) verdünnt. Man erwärmt auf 50 °C und läßt 1560 Teile Di-n-butylamin in einer solchen Geschwindigkeit zulaufen, daß die Temperatur unter äußerer Kühlung bei 60 bis 70 °C zu halten ist. Nach Ende des Zulaufs erhöht man die Temperatur auf 75 °C, hält sie 1 Std. und fügt 150 Teile n-Butanol zu. Das Isocyanatäquivalent sowie das Aminäquivalent liegt jeweils oberhalb 20 000. Der Festkörpergehalt des Produkts liegt bei 79,6 % (1 Std. bei 130 °C).

### 2. Herstellung einer wäßrigen Bindemitteldispersion 1

In einem wärmeträgerölbeheizten Laborreaktor, ausgestattet mit Rührer, Rückflußkühler, Thermometer und Inertgaseinleitungsrohr, werden 1960 Teile eines handelsüblichen Epoxidharzes auf Basis Bisphenol A mit einem Äquivalentgewicht von 490 (Epikote 1001, Firma Shell) in Gegenwart von 220 Teilen Nonylphenol und 111 Teilen Xylol bei 125 °C aufgeschmolzen. Wenn die Schmelze klar ist, kreist man durch Anlegen von Vakuum 20 Minuten lang durch Azeotropdestillation über einen Wasserabscheider anhaftende Feuchtigkeitsspuren aus. Dann gibt man 3,5 Teile N,N-Dimethylbenzylamin zu und führt die Reaktion bei 130 °C bis zu einem Epoxidäquivalentgewicht (EEW) von 1080. Sodann kühlt man und verdünnt währenddessen mit 142 Teilen Butylglykol, und 254 Teilen Xylol. Bei 90 °C gibt man 147 Teile Diethanolamin zu und reagiert für 1 Stunde. Anschließend wird mit 107 Teilen Propylenglykolphenylether und 400 Teilen Isobutanol verdünnt und weiter gekühlt. Bei 70 °C gibt man 46 Teile N,N-Dimethylaminopropylamin zu, erwärmt auf 90 °C und hält für 2 Stunden bei dieser Temperatur. Das Harz hat einen Festgehalt von 70% und eine Viskosität von 3,8 dPas (40%-ig in Propylenglykolmethylether; Platte-Kegel-Viskosimeter bei 23 °C).
Man kühlt anschließend auf 60 °C und mischt 34 Teile Plastilit 3060 (Weichmacher, Fa. BASF) und 1271 Teile des in Beispiel 1 beschriebenen Vernetzers zu.
Man überführt die Mischung in ein Dispergiergefäß, in dem 83 Teile Eisessig, 1994 vollentsalztes Wasser und 7 Teile einer Entschäumerlösung (Surfynol 104; Air Products; 50 %-ige Lösung in Butylglykol) vorgelegt sind, und dispergiert unter Rühren. 15 Minuten später wird mit weiteren 3814 Teilen voll entsalztem Wasser verdünnt.
In einem weiteren Schritt wird die Dispersion in einer Vakuumdestillation von flüchtigen Lösungsmitteln befreit. Das entfernte Lösungsmittel wird mengengleich durch voll entsalztes Wasser ersetzt. Die Dispersion hat einen Festkörper von 32,6% (1 Std. bei 130 °C).

### 3. Herstellung einer wäßrigen Bindemitteldispersion 2

In einem wärmeträgerölbeheizten Laborreaktor, ausgestattet mit Rührer, Rückflußkühler, Thermometer und Inertgaseinleitungsrohr werden 1095 Teile eines handelsüblichen Epoxidharzes auf Basis Bisphenol A mit einem Epoxidäquivalent-Gewicht von 188 zusammen mit 191 Teilen Dodecylphenol und 332 Teilen Bisphenol A in Gegenwart von 81 Teilen Xylol auf 125 °C erwärmt. Wenn die Schmelze klar ist, fügt man 4,1 Teile N,N-Dimethylbenzylamin zu und führt die Reaktion bei 130 °C bis zu einem Epoxidäquivalentgewicht (EEW) von 1100. Sodann kühlt man und verdünnt währenddessen mit 126 Teilen Butylglykol und 247 Teilen sek. Butanol. Bei 105 °C gibt man 162 Teile eines Umsetzungsproduktes aus 1 Mol Diethylentriamin und 2 Mol MIBK (70 %-ig im MIBK; mit einem Aminäquivalent von 124) und 66 Teile N-Methylethanolamin zu und reagiert 2 Std. bei 110 °C. Sodann kühlt man und verdünnt man mit 74 Teilen Plastilit 3060, 51 Teilen Propylenglykolphenylether und 145 Teilen sek. Butanol. Anschließend mischt man 926 Teile des unter Beispiel 1 beschriebenen Vernetzers zu und überführt die Harzmischung in ein Dispergiergefäß, in dem 1320 Teile voll entsalztes Wasser und 39 Teile Eisessig vorgelegt sind. Nach 15 minütigem Homogenisieren wird unter Rühren mit weiteren 2245 Teilen voll entsalztem Wasser bis zu einem Festkörpergehalt von 33 % verdünnt. In einem weiteren Schritt wird die Dispersion in einer Vakuumdestillation von flüchtigen Lösungsmitteln befreit. Die organische Phase des Destillats wird verworfen, während die wäßrige Phase in die Dispersion zurückgeführt wird. Die Dispersion hat einen Festkörper von 36,3 % (1 Std. bei 130 °C).

### 4. Herstellung eines wäßrigen Reibharzes

In einem wärmeträgerölbeheizten Laborreaktor, ausgestattet mit Rührer, Rückflußkühler, Thermometer und Inertgaseinleitungsrohr werden 991 Teile eines handelsüblichen Epoxidharzes auf Basis Bisphenol A mit einem Epoxidäquivalentgewicht von 188 zusammen mit 173 Teilen Dodecylphenol und 300 Teilen Bisphenol A in Gegenwart von 73 Teilen Xylol auf 125 °C erwärmt. Wenn die Schmelze klar ist, fügt man 4,1 Teile N,N-Dimethylbenzylamin zu und führt die Reaktion bei 130 °C bis zu einem Epoxidäquivalentgewicht (EEW) von 1100. Sodann kühlt man und verdünnt währenddessen mit 156 Teilen Butylglykol und 153 Teilen sek. Butanol. Bei 105 °C gibt man 147 Teile eines Umsetzungsproduktes aus 1 Mol Diethylentriamin und 2 Mol MIBK (70 %-ig in MIBK mit einem Aminäquivalent von 124) und 55 Teile N-Methylethanolamin zu und reagiert 2 Std. bei 110 °C. Anschließend wird unter Kühlung mit einer Mischung aus 1039 Teilen voll entsalztem Wasser und 29 Teilen Eisessig versetzt und unter Rühren mit weiteren 780 Teilen voll entsalztem Wasser verdünnt. Man erhält eine niederviskose wäßrige Harzlösung mit einem Festkörper von 40,3 % (1 Std. bei 130°C).

### 5. Herstellung einer wäßrigen Aminsalz-Lösung

In einem offenen Mischgefäß werden 216 Teile N,N-Dimethylethanolamin (DMEA) und 1961 Teile voll entsalztes Wasser vermischt und unter Rühren mit 323 Teilen 88%-iger wäßriger Milchsäure versetzt. Die Lösung ewärmt sich auf ca. 50 °C. Man läßt noch 1 Std. rühren und kühlt auf Raumtemperatur ab. Die Lösung hat einen pH von 5,0. Der DMEA-Lactat-Gehalt liegt bei 20 %.

### 6. Abmischung der Bindemitteldispersionen mit der wäßrigen Aminsalz-Lösung

Die Bindemitteldispersionen werden in den nachfolgend beschriebenen Gewichtsverhältnissen mit der DMEA-Lactatlösung (Abschn. 5) vermischt. Hierzu werden jeweils beide Komponenten auf < 30 ° C gekühlt. Zur Vermeidung von Ausfällungen wird die Dispersion intensiv gerührt, während man die Aminsalz-Lösung langsam zulaufen läßt. Anschließend werden die Dispersionen filtriert.

| Additivierte Bindemitteldispersion | Bindemitteldispersion (Gewichtsteile, Typ) | DMEA-Lactatlös. (Gewichtsteile) |
|---|---|---|
| A | 5000 Typ 1 | 0 |
| B | 4881 Typ 1 | 119 |
| C | 5000 Typ 2 | 0 |
| D | 4767 Typ 2 | 233 |
| E | 4556 Typ 1 | 444 |

### 7. Herstellen einer Piqmentpaste

13,9 Teile VE-Wasser werden mit 0,5 Teilen 90 %-iger Essigsäure versetzt. Anschließend rührt man 35,4 Teile des unter Punkt 4 beschriebenen Reibharzes ein und gibt 48,2 Teile Titandioxyd Rutil hinzu. Dann füllt man mit 2 Teilen VE-Wasser auf und dispergiert diese Mischung über eine Rührwerksmühle so lange, bis eine Feinheit von weniger als 13 µm erreicht ist. Die so hergestellt Paste hat eine Viskosität von 1200 bis 1600 mPas. Zur Viskositätskorrektur wird Essigsäure und VE-Wasser verwendet.

### 8. Herstellen eines Elektrotauchlackbades

Von den unter Punkt 6 hergestellten Bindemitteldispersionen A bis E werden je 2050 g in eine Vorlage von 2230 g VE-Wasser unter Rühren eindispergiert. Anschließend wiegt man unter weiterem Rühren 720 g der unter Punkt 7 hergestellten Pigmentpaste hinzu.
Diese Elektrotauchlackbäder läßt man 72 Std. bei RT offen rühren. Anschließend werden die anwendungstechnischen Versuche wie folgt durchgeführt.

### 9. Anwendungstechnische Versuche

Die unter Punkt 8 hergestellten Elektrotauchlackbäder werden in einen hohen Behälter mit den Maßen h: 350 mm x I:150 mm x b: 100 mm gefüllt. Als Gegenelektrode wird ein Graphitstab eingetaucht, das Lackmaterial wird mit einem Rührer bei einer Rührgeschwindigkeit von 700 U/min in Bewegung gehalten. Dann werden zwei phosphatierte Bleche der Größe 100 mm x 300 mm so in einen Rahmen montiert, daß der Abstand der beiden Bleche 4 mm beträgt und der Rahmen die beiden Bleche seitlich abdichtet. Die so vorbereiteten Bleche werden so in den Elektrotauchlack getaucht, daß noch 10 mm der Prüfbleche oberhalb des Badspiegels ausgetaucht sind.

Die Graphitanode wird mit dem positiven Pol, die beiden Prüftafeln mittels Krokodilklemme mit dem negativen Pol eines Gleichrichters verbunden.

Das Lackbad wird auf eine Temperatur von 28 °C aufgewärmt.

Bei verschiedenen Abscheidespannungen werden die Prüfbleche nun 3 min. lang beschichtet. Anschließend werden sie aus dem Bad gezogen, aus dem Rahmen entfernt, mit VE-Wasser gespült und 20 min. lang bei 170°C eingebrannt.

### Auswertung:

Auf den Prüftafelinnenseiten wird die Reichweite der Beschichtung in cm gemessen, d.h., es wird beurteilt, wie weit sich Lack von der Unterkante der Bleche nach oben in den durch die beiden Tafeln gebildeten Hohlraum abgeschieden hat. Die maximale mögliche Reichweite beträgt somit 29 cm, also der Eintauchtiefe der Bleche. Die Schichtdicke des Lackes nimmt dabei i.a. von unten nach oben hin ab. Die Höhe, bei der die Schichtdicke weniger als 5 µm beträgt, wird als sogenannte 5 µm-Grenze ausgewertet. Zusätzlich wird die Lackschichtdicke auf der Prüftafelaußenseite gemessen.

| Ergebnistabelle | | | | | | |
|---|---|---|---|---|---|---|
| | | Standard | | Standard | | |
| | | Bad A | Bad B | Bad C | Bad D | Bad E |
| Bindemitteldispersion | | A B | | C | D | E |
| Badfestkörper | % | 20,7 | 21,6 | 21,4 | 22,3 | 20,8 |
| pH-Wert | | 5,9 | 5,7 | 6,45 | 6,67 | 6,65 |
| Pigmentgehalt v. FK | % | 29,4 | 28,8 | 30,4 | 29,1 | 28,5 |
| Umgriffreichweite 200V | cm | | | | | 27,5 |
| Schichtdicke außen | µm | | | | | 7 |
| Umgriffreichweite 250V | cm | 21,5 | 24,1 | 22 | 27,5 | 29 |
| Schichtdicke außen | µm | 14,5 | 15 | 14 | 15 | 13 |
| Umgriffreichweite 300V | cm | 23 | 26,5 | 24 | 29 | |
| Schichtdicke außen | µm | 18,5 | 20 | 19,5 | 22,7 | |

### Fazit:

Mit zunehmendem Aminsalzgehalt kann für gleiche Umgriffsreichweiten die Applikationsspannung reduziert werden, was eine dünnere Schichtdicke außen und somit eine gleichmäßigere Lackverteilung zwischen außen und innen zur Folge hat. Der Vorteil für die Praxis liegt darin, daß bei Gegenständen mit schwierig zu beschichtenden Hohlräume empfiehlt, die bei Heizkörperelementen, eine vollständige antikorrosive Beschichtung bei niedrigerem Lackverbrauch als bei dem bisherigen Stand der Technik erzielt werden kann.

## Patentansprüche

1. Elektrisch abscheidbares Überzugsmittel enthaltend Bindemittel und Wasser **dadurch gekennzeichnet, daß** es erhältlich ist, indem das Überzugsmittel ein wasserlösliches aminmodifiziertes Polyurethan- oder Epoxidharz als Bindemittel enthält und ein mit dem Bindemittel nicht reagierendes organisches Aminsalz zugesetzt wird.

2. Elektrisch abscheidbares Überzugsmittel nach Anspruch 1, **dadurch gekennzeichnet**,daßeszusätzlichorganische Lösungsmittel, Pigmente, Füllstoffe, Korrosionsschutzinhibitoren, Lackhilfsmittel und Katalysatoren enthält.

3. Elektrisch abscheidbares Überzugsmittel nach Anspruch 1 oder 2, **dadurch gekennzeichnet, daß** ein niedermolekulares organisches Aminsalz zugesetzt wird.

4. Elektrisch abscheidbares Überzugsmittel nach Anspruch 3, **dadurch gekennzeichnet, daß** ein Salz eines Monoamins zugesetzt wird.

5. Elektrisch abscheidbares Überzugsmittel nach einem der Ansprüche 1 bis 4, **dadurch gekennzeichnet, daß** die zahlenmittlere Molmassenverteilung des Aminsalzes M ₙ < 500 beträgt.

6. Elektrisch abscheidbares Überzugsmittel nach Anspruch 5, **dadurch gekennzeichnet, daß** die zahlenmittlere Molmassenverteilung des Aminsalzes M ₙ < 300 beträgt.

7. Elektrisch abscheidbares Überzugsmittel nach einem der Ansprüche 1 bis 6, **dadurch gekennzeichnet,daß**
es aus Triethylamin, N, N- Dimethylethanolamin, Diisopropylamin oder Alkanolamin und Ameisensäure, Essigsäure, Propionsäure oder Milchsäure herstellbare Aminsalze enthält.

8. Elektrisch abscheidbares Überzugsmittel nach einem der Ansprüche 1 bis 6, **dadurch gekennzeichnet,daß**
es als Aminsalz N, N-Dimethyl-N (2-hydroxyethyl)ammoniumacetat und - lactat enthält.

9. Elektrisch abscheidbares Überzugsmittel nach einem der Ansprüche 1 bis 8, **dadurch gekennzeichnet, daß** 0,001 bis 5 Gew.-% organisches Aminsalz zugesetzt werden.

10. Elektrisch abscheidbares Überzugsmittel nach Anspruch 9, **dadurch gekennzeichnet, daß** 1 bis 3 Gew.-% organisches Aminsalz zugesetzt werden.

11. Elektrisch abscheidbares Überzugsmittel nach einem der Ansprüche 1 bis 8, **dadurch gekennzeichnet, daß** es
a) 30 bis 60 Gew.-% Bindemittel,
b) 0,001 bis 5 Gew.-% organisches Aminsalz,
c) 7 bis 15 Gew.-% Pigment und
d) 20 bis 62 Gew.-% Wasser
enthält.

12. Elektrisch abscheidbares Überzugsmittel nach einem der Ansprüche 1 bis 8, **dadurch gekennzeichnet,daß** es
a) 34 bis 40 Gew.-% Bindemittel,
b) 1 bis 3 Gew.-% organisches Aminsalz,
c) 8 bis 10 Gew.-% Pigment und
d) 47 bis 57 Gew.-% Wasser
enthält.

13. Elektrisch abscheidbares Überzugsmittel nach einem der Ansprüche 1 bis 12, **dadurch gekennzeichnet, daß** der pH-Wertunter 7 liegt.

14. Elektrisch abscheidbares Überzugsmittel nach Anspruch 13, **dadurch gekennzeichnet, daß** der pH-Wert zwischen 5 und 6,8 liegt.

15. Verfahren zur Herstellung eines elektrisch abscheidbaren Überzugsmittels nach einem der Ansprüche 1 bis 14, **dadurch gekennzeichnet, daß** einer Dispersion des Bindemittels organische Aminsalze zugesetzt und dem Gemisch anschließend Pigmente zugegeben werden.

16. Verwendung des Überzugsmittels nach einem der Ansprüche 1 bis 14 zur Beschichtung von Substraten.

17. Verwendung des Überzugsmittels nach Anspruch 16 zur Beschichtung von Heizkörpern.

## Claims

1. Electrodepositable coating composition comprising binders and water, **characterized in that** it is obtainable by the coating composition comprising a water-soluble, amine-modified polyurethane resin or epoxy resin binder and by adding an organic amine salt which does not react with the binder.

2. Electrodepositable coating composition according to claim 1, **characterized in that** it further comprises organic solvents, pigments, fillers, corrosion protection inhibitors, paint auxiliaries and catalysts.

3. Electrodepositable coating composition according to claim 1 or 2, **characterized in that** a low molecular mass organic amine salt is added.

4. Electrodepositable coating composition according to claim 3, **characterized in that** a salt of a monoamine is added.

5. Electrodepositable coating composition according to one of claims 1 to 4, **characterized in that** the number-average molecular mass distribution of the amine salt Mₙ is < 500.

6. Electrodepositable coating composition according to claim 5, **characterized in that** the number-average molecular mass distribution of the amine salt Mₙ is < 300.

7. Electrodepositable coating composition according to one of claims 1 to 6, **characterized in that** it comprises amine salts preparable from triethylamine, N,N-dimethylethanolamine, diisopropylamine or alkanolamine and formic acid, acetic acid, propionic acid or lactic acid.

8. Electrodepositable coating composition according to one of claims 1 to 6, **characterized in** as amine salt it comprises N,N-dimethyl-N-(2-hydroxyethyl)ammonium acetate and N,N-dimethyl-N-(2-hydroxyethyl)ammonium lactate.

9. Electrodepositable coating composition according to one of claims 1 to 8, **characterized in that** from 0.001 to 5% by weight of organic amine salt are added.

10. Electrodepositable coating composition according to claim 9, **characterized in that** from 1 to 3% by weight of organic amine salt are added.

11. Electrodepositable coating composition according to one of claims 1 to 8, **characterized in that** it comprises
a) from 30 to 60% by weight of binder,
b) from 0.001 to 5% by weight of organic amine salt,
c) from 7 to 15% by weight of pigment, and
d) from 20 to 62% by weight of water.

12. Electrodepositable coating composition according to one of claims 1 to 8, **characterized in that** it comprises
a) from 34 to 40% by weight of binder,
b) from 1 to 3% by weight of organic amine salt,
c) from 8 to 10% by weight of pigment, and
d) from 47 to 57% by weight of water.

13. Electrodepositable coating composition according to one of claims 1 to 12, **characterized in that** the pH is below 7.

14. Electrodepositable coating composition according to claim 13, **characterized in that** the pH is between 5 and 6.8.

15. Process for preparing an electrodepositable coating composition according to one of claims 1 to 14, **characterized in that** organic amine salts are added to a dispersion of the binder and then pigments are added to the mixture.

16. Use of the coating composition according to one of claims 1 to 14 for coating substrates.

17. Use of the coating composition according to claim 16 for coating radiators.

## Revendications

1. Composition de revêtement apte à l'électrodéposition, contenant liant et eau, **caractérisée en ce qu'**elle peut être obtenue par le fait que la composition de revêtement contient en tant que liant une résine époxy ou polyuréthanne insoluble dans l'eau, modifiée par une amine, et on y ajoute un sel organique d'amine ne réagissant pas avec le liant.

2. Composition de revêtement apte à l'électro-déposition, selon la revendication 1, **caractérisée en ce qu'**elle contient en outre des solvants organiques, des pigments, des charges, des inhibiteurs anticorrosion, des adjuvants pour peintures et des catalyseurs.

3. Composition de revêtement apte à l'électro-déposition, selon la revendication 1 ou 2, **caractérisée en ce qu'**on ajoute un sel organique d'amine de faible masse moléculaire.

4. Composition de revêtement apte à l'électro-déposition, selon la revendication 3, **caractérisée en ce qu'**on ajoute un sel d'une monoamine.

5. Composition de revêtement apte à l'électro-déposition, selon l'une quelconque des revendications 1 à 4, **caractérisée en ce que** la distribution de masse moléculaire moyenne en nombre du sel d'amine Mₙ est < 500.

6. Composition de revêtement apte à l'électro-déposition, selon la revendication 5, **caractérisée en ce que** la distribution de masse moléculaire moyenne en nombre du sel d'amine Mₙ est < 300.

7. Composition de revêtement apte à l'électro-déposition, selon l'une quelconque des revendications 1 à 6, **caractérisée en ce qu'**elle contient des sels d'amines pouvant être préparés à partir de triéthylamine, N,N-diméthyléthanolamine, de diisopropylamine ou d'une alcanolamine et d'acide formique, d'acide acétique, d'acide propionique ou d'acide lactique.

8. Composition de revêtement apte à l'électro-déposition, selon l'une quelconque des revendications 1 à 6, **caractérisée en ce qu'**elle contient en tant que sel d'amine de l'acétate ou du lactate de N,N-diméthyl-N-(2-hydroxyéthyl)ammonium.

9. Composition de revêtement apte à l'électro-déposition, selon l'une quelconque des revendications 1 à 8, **caractérisée en ce qu'**on ajoute de 0,001 à 5% en poids de sel organique d'amine.

10. Composition de revêtement apte à l'électro-déposition, selon la revendication 9, **caractérisée en ce qu'**on ajoute de 1 à 3% en poids de sel organique d'amine.

11. Composition de revêtement apte à l'électro-déposition, selon l'une quelconque des revendications 1 à 8, **caractérisée en ce qu'**elle contient
a) de 30 à 60% en poids de liant,
b) de 0,001 à 5% en poids de sel organique d'amine,
c) de 7 à 15% en poids de pigment et
d) de 20 à 62% en poids d'eau.

12. Composition de revêtement apte à l'électro-déposition, selon l'une quelconque des revendications 1 à 8, **caractérisée en ce qu'**elle contient
a) de 34 à 40% en poids de liant,
b) de 1 à 3% en poids de sel organique d'amine,
c) de 8 à 10% en poids de pigment et
d) de 47 à 57% en poids d'eau.

13. Composition de revêtement apte à l'électro-déposition, selon l'une quelconque des revendications 1 à 12, **caractérisée en ce que** le pH est inférieur à 7.

14. Composition de revêtement apte à l'électro-déposition, selon la revendication 13, **caractérisée en ce que** le pH est compris entre 5 et 6,8.

15. Procédé pour la préparation d'une composition de revêtement apte à l'électrodéposition, selon l'une quelconque des revendications 1 à 14, **caractérisé en ce qu'**on ajoute des sels organiques d'amines à une dispersion du liant et on ajoute ensuite des pigments au mélange.

16. Utilisation de la composition de revêtement, selon l'une quelconque des revendications 1 à 14, pour l'enduction de subjectiles.

17. Utilisation de la composition de revêtement selon la revendication 16, pour l'enduction de corps de chauffe.
